# EUROPEAN PATENT APPLICATION

(11) **EP 4 462 755 A1**
(43) Date of publication of application: **13.11.2024**
(21) Application number: 22920827.7
(22) Date of filing: 22.12.2022
(51) Int. Cl.: H04L 67/12, H04L 67/50

(54) **CLOUD-BASED SENSOR CALIBRATION METHOD AND APPARATUS IN M2M SYSTEM**

(30) Priority: 17.01.2022 US 202263300082 P
(71) Applicant: Hyundai Motor Company, Seoul 06797 (KR); Kia Corporation, Seocho-gu Seoul 06797 (KR); INDUSTRY ACADEMY COOPERATION FOUNDATION OF SEJONG UNIVERSITY, Seoul 05006 (KR)
(72) Inventor: SONG, Jae Seung, Seoul 05006 (KR)
(74) Representative: Isarpatent
(86) International application number: PCT/KR2022/021034
(87) International publication number: WO 2023/136499

(57) **Abstract**

The present disclosure relates to device calibration based on a cloud in a machine-to-machine (M2M) system, and a method for calibration based on a cloud in an M2M system may include transmitting a calibration parameter stored in the cloud to a calibration application, receiving a calibration value and a calibration rule from the calibration application, and adjusting data received from a device based on the calibration value and the calibration rule

## Description

### Technical Field

The present disclosure relates to a machine-to-machine (M2M) system, and more particularly, to a method and apparatus for performing cloud-based calibration for a sensor in an M2M system.

### Background Art

Recently, Machine-to-Machine (M2M) systems have been introduced in different applications. An M2M communication may refer to a communication performed between machines without human intervention. M2M includes Machine Type Communication (MTC), Internet of Things (IoT) or Device-to-Device (D2D). In the following description, the term "M2M" is uniformly used for convenience of explanation, but the present disclosure is not limited thereto. A terminal used for M2M communication may be an M2M terminal or an M2M device. An M2M terminal may generally be a device having low mobility while transmitting a small amount of data. Herein, the M2M terminal may be used in connection with an M2M server that centrally stores and manages inter-machine communication information. In addition, an M2M terminal may be applied to various systems such as object tracking, automobile linkage, and power metering.

Meanwhile, with respect to an M2M terminal, the oneM2M standardization organization provides requirements for M2M communication, things to things communication and IoT technology, and technologies for architecture, Application Program Interface (API) specifications, security solutions and interoperability. The specifications of the oneM2M standardization organization provide a framework to support a variety of applications and services such as smart cities, smart grids, connected cars, home automation, security and health.

### Disclosure Technical Problem

The present disclosure is directed to providing a method and apparatus for performing cloud-based calibration for a sensor in a machine-to-machine (M2M) system.

The present disclosure is directed to a method and apparatus for calibrating a sensor by using a cloud resource in an M2M system.

The present disclosure is directed to providing a method and apparatus for adjusting a sensor by using a calibration value and a calibration rule in an M2M system.

The technical problems solved by the present disclosure are not limited to the above technical problems and other technical problems which are not described herein will be clearly understood by a person having ordinary skill in the technical field, to which the present disclosure belongs, from the following description.

### Technical Solution

According to an embodiment of the present disclosure, a method for calibration based on a cloud in a machine-to-machine (M2M) system may include transmitting a calibration parameter stored in the cloud to a calibration application, receiving a calibration value and a calibration rule from the calibration application, and adjusting data received from a target device based on the calibration value and the calibration rule.

According to an embodiment of the present disclosure, a device for calibration based on a cloud in a machine-to-machine (M2M) system may include a transceiver and a processor coupled with the transceiver, and the processor may be configured to transmit a calibration parameter stored in the cloud to a calibration application, to receive a calibration value and a calibration rule from the calibration application, and to adjust data received from a target device based on the calibration value and the calibration rule.

### Advantageous Effects

According to the present disclosure, in a machine-to-machine (M2M) system, sensor calibration may be performed based on a cloud.

Effects obtained in the present disclosure are not limited to the above-mentioned effects, and other effects not mentioned above may be clearly understood by those skilled in the art from the following description.

### Description of Drawings

FIG. 1 illustrates a layered structure of a machine-to-machine (M2M) system according to the present disclosure.
FIG. 2 illustrates a reference point in an M2M system according to the present disclosure.
FIG. 3 illustrates each node in an M2M system according to the present disclosure.
FIG. 4 illustrates a common service function in an M2M system according to the present disclosure.
FIG. 5 illustrates a method in which an originator and a receiver exchange a message in an M2M system according to the present disclosure.
FIG. 6 illustrates an example of a sensor calibration procedure using an IoT platform in an M2M system according to the present disclosure.
FIG. 7 illustrates an example of a cloud-based sensor calibration procedure in an M2M system according to the present disclosure.
FIG. 8 illustrates an example of a procedure for performing calibration by a calibration device in an M2M system according to the present disclosure.
FIG. 9 illustrates a flowchart of cloud-based device calibration in an M2M system according to the present disclosure.
FIG. 10 illustrates container resources including information on a calibration result in an M2M system according to the present disclosure.
FIG. 11 illustrates resources for sensor calibration in an M2M system according to the present disclosure.
FIG. 12 illustrates an example of a cloud-based sensor calibration procedure in an M2M system according to the present disclosure.
FIG. 13 illustrates a configuration of an M2M device in an M2M system according to the present disclosure.

### Mode for Invention

Hereinafter, embodiments of the present disclosure will be described in detail with reference to the accompanying drawings, which will be easily implemented by those skilled in the art. However, the present disclosure may be embodied in many different forms and is not limited to the exemplary embodiments described herein.

In the present disclosure, the terms first, second, etc. are used only for the purpose of distinguishing one component from another, and do not limit the order or importance of components, etc. unless specifically stated otherwise. Thus, within the scope of this disclosure, a first component in one embodiment may be referred to as a second component in another embodiment, and similarly a second component in one embodiment may be referred to as a first component.

In the present disclosure, when a component is referred to as being "linked", "coupled", or "connected" to another component, it is understood that not only a direct connection relationship but also an indirect connection relationship through an intermediate component may also be included. Also, when a component is referred to as "comprising" or "having" another component, it may mean further inclusion of another component not the exclusion thereof, unless explicitly described to the contrary.

In the present disclosure, components that are distinguished from each other are intended to clearly illustrate each feature. However, it does not necessarily mean that the components are separate. In other words, a plurality of components may be integrated into one hardware or software unit, or a single component may be distributed into a plurality of hardware or software units. Thus, unless otherwise noted, such integrated or distributed embodiments are also included within the scope of the present disclosure.

In the present disclosure, components described in the various embodiments are not necessarily essential components, and some may be optional components. Accordingly, embodiments consisting of a subset of the components described in one embodiment are also included within the scope of the present disclosure. Also, exemplary embodiments that include other components in addition to the components described in the various exemplary embodiments are also included in the scope of the present disclosure.

In the following description of the embodiments of the present disclosure, a detailed description of known functions and configurations incorporated herein will be omitted when it may make the subject matter of the present disclosure rather unclear. Parts not related to the description of the present disclosure in the drawings are omitted, and like parts are denoted by similar reference numerals.

Although exemplary embodiment is described as using a plurality of units to perform the exemplary process, it is understood that the exemplary processes may also be performed by one or plurality of modules. Additionally, it is understood that the term controller/control unit refers to a hardware device that includes a memory and a processor and is specifically programmed to execute the processes described herein. The memory is configured to store the modules and the processor is specifically configured to execute said modules to perform one or more processes which are described further below.

In addition, the present specification describes a network based on Machine-to-Machine (M2M) communication, and a work in M2M communication network may be performed in a process of network control and data transmission in a system managing the communication network. In the present specification, an M2M terminal may be a terminal performing M2M communication. However, in consideration of backward compatibility, it may be a terminal operating in a wireless communication system. In other words, an M2M terminal may refer to a terminal operating based on M2M communication network but is not limited thereto. An M2M terminal may operate based on another wireless communication network and is not limited to the exemplary embodiment described above.

In addition, an M2M terminal may be fixed or have mobility. An M2M server refers to a server for M2M communication and may be a fixed station or a mobile station. In the present specification, an entity may refer to hardware like M2M device, M2M gateway and M2M server. In addition, for example, an entity may be used to refer to software configuration in a layered structure of M2M system and is not limited to the embodiment described above.

In addition, for example, the present disclosure mainly describes an M2M system but is not solely applied thereto. In addition, an M2M server may be a server that performs communication with an M2M terminal or another M2M server. In addition, an M2M gateway may be a connection point between an M2M terminal and an M2M server. For example, when an M2M terminal and an M2M server have different networks, the M2M terminal and the M2M server may be connected to each other through an M2M gateway. Herein, for example, both an M2M gateway and an M2M server may be M2M terminals and are not limited to the embodiment described above.

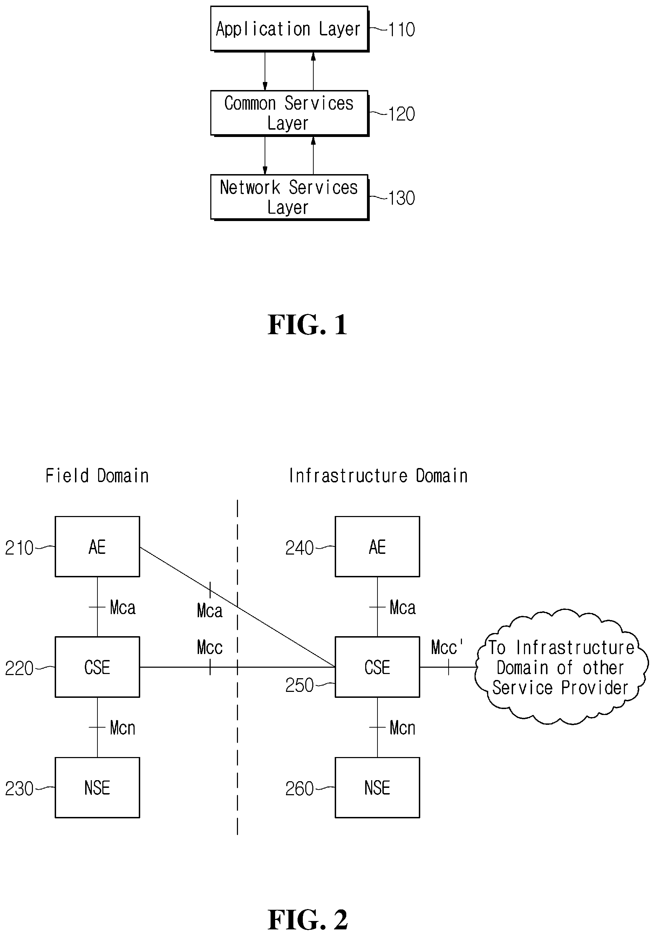

The present disclosure relates to a method and device for cloud-based sensor calibration in a machine-to-machine (M2M) system. More particularly, the present disclosure describes sensor calibration in an M2M system using a calibration value and a calibration rule stored in a cloud.
oneM2M is a de facto standards organization that was founded to develop a communal IoT service platform sharing and integrating application service infrastructure (platform) environments beyond fragmented service platform development structures limited to separate industries like energy, transportation, national defense and public service.oneM2M aims to render requirements for things to things communication and IoT technology, architectures, Application Program Interface (API) specifications, security solutions and interoperability. For example, the specifications of oneM2M provide a framework to support a variety of applications and services such as smart cities, smart grids, connected cars, home automation, security and health. In this regard, oneM2M has developed a set of standards defining a single horizontal platform for data exchange and sharing among all the applications. Applications across different industrial sections may also be considered by oneM2M. Like an operating system, oneM2M provides a framework connecting different technologies, thereby creating distributed software layers facilitating unification. Distributed software layers are implemented in a common services layer between M2M applications and communication Hardware/Software (HW/SW) rendering data transmission. For example, a common services layer may be a part of a layered structure illustrated in FIG. 1.

FIG. 1 is a view illustrating a layered structure of a Machine-to-Machine (M2M) system according to the present disclosure. Referring to FIG. 1, a layered structure of an M2M system may include an application layer 110, a common services layer 120 and a network services layer 130. Herein, the application layer 110 may be a layer operating based on a specific application. For example, an application may be a fleet tracking application, a remote blood sugar monitoring application, a power metering application or a controlling application. In other words, an application layer may be a layer for a specific application. Herein, an entity operating based on an application layer may be an application entity (AE).

The common services layer 120 may be a layer for a common service function (CSF). For example, the common services layer 120 may be a layer for providing common services like data management, device management, M2M service subscription management and location service. For example, an entity operating based on the common services layer 120 may be a common service entity (CSE).

The common services layer 120 may provide a set of services that are grouped into CSFs according to functions. A multiplicity of instantiated CSFs constitutes CSEs. CSEs may interface with applications (for example, application entities or AEs in the terminology of oneM2M), other CSEs and base networks (for example, network service entities or NSEs in the terminology of oneM2M). The network services layer 130 may provide the common services layer 120 with services such as device management, location service and device triggering. Herein, an entity operating based on the network layer 120 may be a network service entity (NSE).

FIG. 2 is a view illustrating reference points in an M2M system according to the present disclosure. Referring to FIG. 2, an M2M system structure may be distinguished into a field domain and an infrastructure domain. Herein, in each domain, each of the entities may perform communication through a reference point (for example, Mca or Mcc). For example, a reference point may indicate a communication flow between each entity. In particular, referring to FIG. 2, the reference point Mca between AE 210 or 240 and CSE 220 or 250, the reference point Mcc between different CSEs and Mcn reference point between CSE 220 or 250 and NSE 230 or 260 may be set.

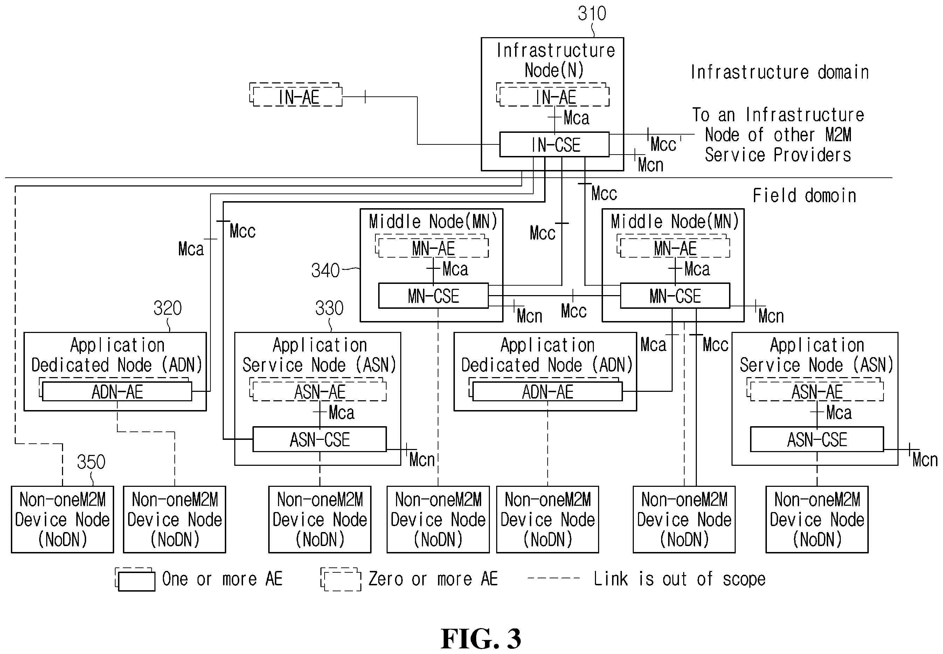

FIG. 3 is a view illustrating each node in an M2M system according to the present disclosure. Referring to FIG. 3, an infrastructure domain of a specific M2M service provider may provide a specific infrastructure node (IN) 310. Herein, the CSE of the IN may be configured to perform communication based on the AE and the reference point Mca of another infrastructure node. In particular, one IN may be set for each M2M service provider. In other words, the IN may be a node that performs communication with the M2M terminal of another infrastructure based on an infrastructure structure. In addition, for example, conceptually, a node may be a logical entity or a software configuration.

Next, an application dedicated node (ADN) 320 may be a node including at least one AE but not CSE. In particular, an ADN may be set in the field domain. In other words, an ADN may be a dedicated node for AE. For example, an ADN may be a node that is set in an M2M terminal in hardware. In addition, the application service node (ASN) 330 may be a node including one CSE and at least one AE. ASN may be set in the field domain. In other words, it may be a node including AE and CSE. In particular, an ASN may be a node connected to an IN. For example, an ASN may be a node that is set in an M2M terminal in hardware.

In addition, a middle node (MN) 340 may be a node including a CSE and including zero or more AEs. In particular, the MN may be set in the field domain. An MN may be connected to another MN or IN based on a reference point. In addition, for example, an MN may be set in an M2M gateway in hardware. As an example, a non-M2M terminal node 350 (Non-M2M device node, NoDN) is a node that does not include M2M entities. It may be a node that performs management or collaboration together with an M2M system.

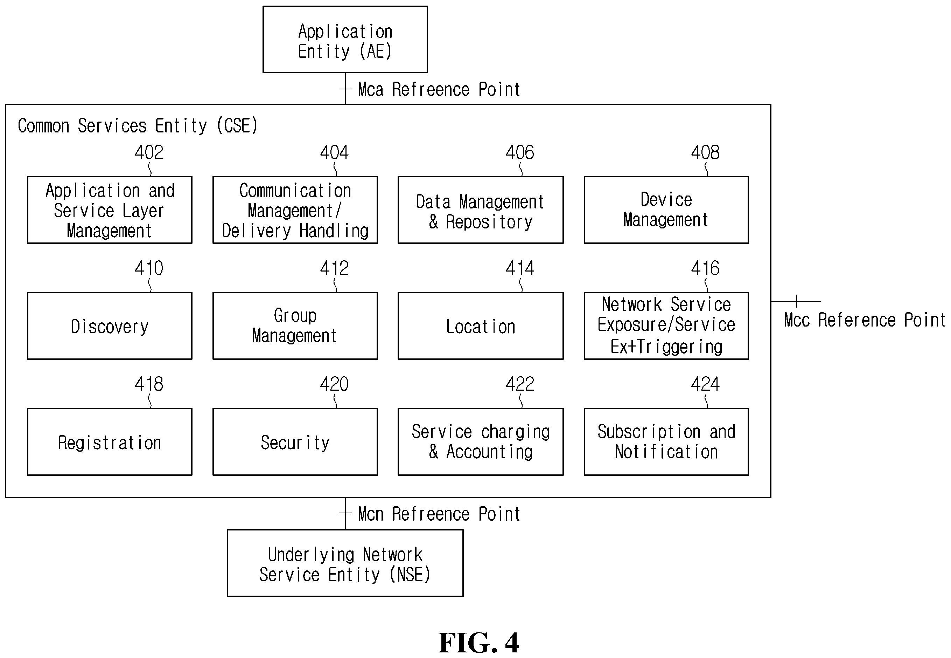

FIG. 4 is a view illustrating a common service function in an M2M system according to the present disclosure. Referring to FIG. 4, common service functions may be provided. For example, a common service entity may provide at least one or more CSFs among application and service layer management 402, communication management and delivery handling 404, data management and repository 406, device management 408, discovery 410, group management 412, location 414, network service exposure/service execution and triggering 416, registration 418, security 420, service charging and accounting 422, service session management and subscription/notification 424. At this time, M2M terminals may operate based on a common service function. In addition, a common service function may be possible in other embodiments and is not limited to the above-described exemplary embodiment.

The application and service layer management 402 CSF provides management of AEs and CSEs. The application and service layer management 402 CSF includes not only the configuring, problem solving and upgrading of CSE functions but also the capability of upgrading AEs. The communication management and delivery handling 404 CSF provides communications with other CSEs, AEs and NSEs. The communication management and delivery handling 404 CSF are configured to determine at what time and through what connection communications are to be delivered, and also determine to buffer communication requests to deliver the communications later, if necessary and permitted.

The data management and repository 406 CSF provides data storage and transmission functions (for example, data collection for aggregation, data reformatting, and data storage for analysis and sematic processing). The device management 408 CSF provides the management of device capabilities in M2M gateways and M2M devices.

The discovery 410 CSF is configured to provide an information retrieval function for applications and services based on filter criteria. The group management 412 CSF provides processing of group-related requests. The group management 412 CSF enables an M2M system to support bulk operations for many devices and applications. The location 414 CSF is configured to enable AEs to obtain geographical location information.

The network service exposure/service execution and triggering 416 CSF manages communications with base networks for access to network service functions. The registration 418 CSF is configured to provide AEs (or other remote CSEs) to a CSE. The registration 418 CSF allows AEs (or remote CSE) to use services of CSE. The security 420 CSF is configured to provide a service layer with security functions like access control including identification, authentication and permission. The service charging and accounting 422 CSF is configured to provide charging functions for a service layer. The subscription/notification 424 CSF is configured to allow subscription to an event and notifying the occurrence of the event.

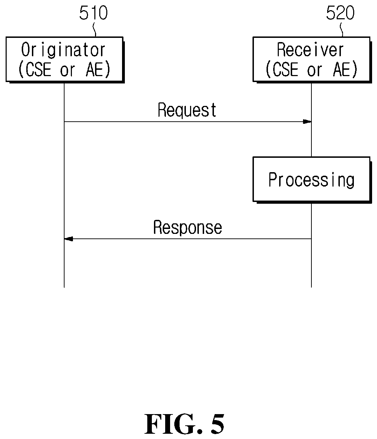

FIG. 5 is a view illustrating that an originator and a receiver exchange a message in an M2M system according to the present disclosure. Referring to FIG. 5, the originator 501 may be configured to transmit a request message to the receiver 520. In particular, the originator 510 and the receiver 520 may be the above-described M2M terminals. However, the originator 510 and the receiver 520 are not limited to M2M terminals but may be other terminals. They are not limited to the above-described exemplary embodiment. In addition, for example, the originator 510 and the receiver 520 may be nodes, entities, servers or gateways, which are described above. In other words, the originator 510 and the receiver 520 may be hardware or software configurations and are not limited to the above-described embodiment.

Herein, for example, a request message transmitted by the originator 510 may include at least one parameter. Additionally, a parameter may be a mandatory parameter or an optional parameter. For example, a parameter related to a transmission terminal, a parameter related to a receiving terminal, an identification parameter and an operation parameter may be mandatory parameters. In addition, optional parameters may be related to other types of information. In particular, a transmission terminal-related parameter may be a parameter for the originator 510. In addition, a receiving terminal-related parameter may be a parameter for the receiver 520. An identification parameter may be a parameter required for identification of each other.

Further, an operation parameter may be a parameter for distinguishing operations. For example, an operation parameter may be set to any one among Create, Retrieve, Update, Delete and Notify. In other words, the parameter may aim to distinguish operations. In response to receiving a request message from the originator 510, the receiver 520 may be configured to process the message. For example, the receiver 520 may be configured to perform an operation included in a request message. For the operation, the receiver 520 may be configured to determine whether a parameter is valid and authorized. In particular, in response to determining that a parameter is valid and authorized, the receiver 520 may be configured to check whether there is a requested resource and perform processing accordingly.

For example, in case an event occurs, the originator 510 may be configured to transmit a request message including a parameter for notification to the receiver 520. The receiver 520 may be configured to check a parameter for a notification included in a request message and may perform an operation accordingly. The receiver 520 may be configured to transmit a response message to the originator 510.

A message exchange process using a request message and a response message, as illustrated in FIG. 5, may be performed between AE and CSE based on the reference point Mca or between CSEs based on the reference point Mcc. In other words, the originator 510 may be AE or CSE, and the receiver 520 may be AE or CSE. According to an operation in a request message, such a message exchange process as illustrated in FIG. 5 may be initiated by either AE or CSE.

A request from a requestor to a receiver through the reference points Mca and Mcc may include at least one mandatory parameter and at least one optional parameter. In other words, each defined parameter may be either mandatory or optional according to a requested operation. For example, a response message may include at least one parameter among those listed in Table 1 below.

**Table 1**

| Response message parameter/success or not |
|---|
| Response Status Code - successful, unsuccessful, ack |
| Request Identifier - uniquely identifies a Request message |
| Content - to be transferred |
| To - the identifier of the Originator or the Transit CSE that sent the corresponding non-blocking request |
| From - the identifier of the Receiver |
| Originating Timestamp - when the message was built |
| Result Expiration Timestamp - when the message expires |
| Event Category - what event category shall be used for the response message |
| Content Status |
| Content Offset |
| Token Request Information |
| Assigned Token Identifiers |
| Authorization Signature Request Information |
| Release Version Indicator - the oneM2M release version that this response message conforms to |

A filter criteria condition, which can be used in a request message or a response message, may be defined as in Table 2 and Table 3 below.

**Table 2**

| Condition tag | Multiplicity | Description |
|---|---|---|
| Matching Conditions | | |
| createdBefore | 0..1 | The creationTime attribute of the matched resource is chronologically before the specified value. |
| createdAfter | 0..1 | The creationTime attribute of the matched resource is chronologically after the specified value. |
| modifiedSince | 0..1 | The lastModifiedTime attribute of the matched resource is chronologically after the specified value. |
| unmodifiedSince | 0..1 | The lastModifiedTime attribute of the matched resource is chronologically before the specified value. |
| stateTagSmaller | 0..1 | The stateTag attribute of the matched resource is smaller than the specified value. |
| stateTagBigger | 0..1 | The stateTag attribute of the matched resource is bigger than the specified value. |
| expireBefore | 0..1 | The expirationTime attribute of the matched resource is chronologically before the specified value. |
| expire After | 0..1 | The expirationTime attribute of the matched resource is chronologically after the specified value. |
| labels | 0..1 | The labels attribute of the matched resource matches the specified value. |
| labelsQuery | 0..1 | The value is an expression for the filtering of labels attribute of resource when it is of key-value pair format. The expression is about the relationship between label-key and label-value which may include equal to or not equal to, within or not within a specified set etc. For example, label-key equals to label value, or label-key within {label-value 1, label-value2}. Details are defined in [3] |
| childLabels | 0..1 | A child of the matched resource has labels attributes matching the specified value. The evaluation is the same as for the labels attribute above. Details are defined in [3]. |
| parentLabels | 0..1 | The parent of the matched resource has labels attributes matching the specified value. The evaluation is the same as for the labels attribute above. Details are defined in [3]. |
| resourceType | 0..n | The resourceType attribute of the matched resource is the same as the specified value. It also allows differentiating between normal and announced resources. |
| childResourceType | 0..n | A child of the matched resource has the resource Type attribute the same as the specified value. |
| parentResourceType | 0..1 | The parent of the matched resource has the resourceType attribute the same as the specified value. |
| sizeAbove | 0..1 | The contentSize attribute of the <contentInstance> matched resource is equal to or greater than the specified value. |
| sizeBelow | 0..1 | The contentSize attribute of the <contentInstance> matched resource is smaller than the specified value. |
| contentType | 0..n | The contentInfo attribute of the <contentInstance> matched resource matches the specified value. |
| attribute | 0..n | This is an attribute of resource types (clause 9.6). Therefore, a real tag name is variable and depends on its usage and the value of the attribute can have wild card *. E.g. creator of container resource type can be used as a filter criteria tag as "creator=Sam", "creator=Sam*", "creator=*Sam". |
| childAttribute | 0..n | A child of the matched resource meets the condition provided. The evaluation of this condition is similar to the attribute matching condition above. |
| parentAttribute | 0..n | The parent of the matched resource meets the condition provided. The evaluation of this condition is similar to the attribute matching condition above. |
| semanticsFilter | 0..n | Both semantic resource discovery and semantic query use semanticsFilter to specify a query statement that shall be specified in the SPARQL query language [5]. When a CSE receives a RETRIEVE request including a semanticsFilter, and the Semantic Query Indicator parameter is also present in the request, the |
| | | request shall be processed as a semantic query; otherwise, the request shall be processed as a semantic resource discovery. |
| | | In the case of semantic resource discovery targeting a specific resource, if the semantic description contained in the <semanticDescriptor> of a child resource matches the semanticFilter, the URI of this child resource will be included in the semantic resource discovery result. |
| | | In the case of semantic query, given a received semantic query request and its query scope, the SPARQL query statement shall be executed over aggregated semantic information collected from the semantic resource(s) in the query scope and the produced output will be the result of this semantic query. |
| | | Examples for matching semantic filters in SPARQL to semantic descriptions can be found in [i.28]. |
| filterOperation | 0..1 | Indicates the logical operation (AND/OR) to be used for different condition tags. The default value is logical AND. |
| contentFilterS yntax | 0..1 | Indicates the Identifier for syntax to be applied for content-based discovery. |
| contentFilterQuery | 0..1 | The query string shall be specified when contentFilterSyntax parameter is present. |

**Table 3**

| Condition tag | Multiplicity | Description |
|---|---|---|
| Filter Handling Conditions | | |
| filterUsage | 0..1 | Indicates how the filter criteria is used. If provided, possible values are 'discovery' and 'IPEOnDemandDiscovery'. |
| | | If this parameter is not provided, the Retrieve operation is a generic retrieve operation and the content of the child resources fitting the filter criteria is returned. |
| | | If filterUsage is 'discovery', the Retrieve operation is for resource discovery (clause 10.2.6), i.e. only the addresses of the child resources are returned. If filterUsage is 'IPEOnDemandDiscovery', the other filter conditions are sent to the IPE as well as the discovery Originator ID. When the IPE successfully generates new resources matching with the conditions, then the resource address(es) shall be returned. This value shall only be valid for the Retrieve request targeting an <AE> resource that represents the IPE. |
| limit | 0..1 | The maximum number of resources to be included in the filtering result. This may be modified by the Hosting CSE. When it is modified, then the new value shall be smaller than the suggested value by the Originator. |
| level | 0..1 | The maximum level of resource tree that the Hosting CSE shall perform the operation starting from the target resource (i.e. To parameter). This shall only be applied for Retrieve operation. The level of the target resource itself is zero and the level of the direct children of the target is one. |
| offset | 0..1 | The number of direct child and descendant resources that a Hosting CSE shall skip over and not include within a Retrieve response when processing a Retrieve request to a targeted resource. |
| applyRelativePath | 0..1 | This attribute contains a resource tree relative path (e.g.../tempContainer/LATEST). This condition applies after all the matching conditions have been used (i.e. a matching result has been obtained). The attribute determines the set of resource(s) in the final filtering result. The filtering result is computed by appending the relative path to the path(s) in the matching result. All resources whose Resource-IDs match that combined path(s) shall be returned in the filtering result. If the relative path does not represent a valid resource, the outcome is the same as if no match was found, i.e. there is no corresponding entry in the filtering result. |

A response to a request for accessing a resource through the reference points Mca and Mcc may include at least one mandatory parameter and at least one optional parameter. In other words, each defined parameter may be either mandatory or optional according to a requested operation or a mandatory response code. For example, a request message may include at least one parameter among those listed in Table 4 below.

**Table 4**

| Request message parameter | |
|---|---|
| Mandatory | Operation - operation to be executed / CREAT, Retrieve, Update, Delete, Notify |
| | To - the address of the target resource on the target CSE |
| | From - the identifier of the message Originator |
| | Request Identifier - uniquely identifies a Request message |
| Operation dependent | Content - to be transferred |
| | Resource Type - of resource to be created |
| Optional | Originating Timestamp - when the message was built |
| | Request Expiration Timestamp - when the request message expires |
| | Result Expiration Timestamp - when the result message expires |
| | Operational Execution Time - the time when the specified operation is to be executed by the target CSE |
| | Response Type - type of response that shall be sent to the Originator |
| | Result Persistence - the duration for which the reference containing the responses is to persist |
| | Result Content - the expected components of the result |
| | Event Category - indicates how and when the system should deliver the message |
| | Delivery Aggregation - aggregation of requests to the same target CSE is to be used |
| | Group Request Identifier - Identifier added to the group request that is to be fanned out to each member of the group |
| | Group Request Target Members-indicates subset of members of a group |
| | Filter Criteria - conditions for filtered retrieve operation |
| | Desired Identifier Result Type - format of resource identifiers returned |
| | Token Request Indicator - indicating that the Originator may attempt Token Request procedure (for Dynamic Authorization) if initiated by the Receiver |
| | Tokens - for use in dynamic authorization |
| | Token IDs - for use in dynamic authorization |
| | Role IDs - for use in role based access control |
| | Local Token IDs - for use in dynamic authorization |
| | Authorization Signature Indicator - for use in Authorization Relationship Mapping |
| | Authorization Signature - for use in Authorization Relationship Mapping |
| | Authorization Relationship Indicator - for use in Authorization Relationship Mapping |
| | Semantic Query Indicator - for use in semantic queries |
| | Release Version Indicator - the oneM2M release version that this request message conforms to. |
| | Vendor Information |

A normal resource includes a complete set of representations of data constituting the base of information to be managed. Unless qualified as either "virtual" or "announced", the resource types in the present document are normal resources. A virtual resource is used to trigger processing and/or a retrieve result. However, a virtual resource does not have a permanent representation in a CSE. An announced resource contains a set of attributes of an original resource. When an original resource changes, an announced resource is automatically updated by the hosting CSE of the original resource. The announced resource contains a link to the original resource. Resource announcement enables resource discovery. An announced resource at a remote CSE may be used to create a child resource at a remote CSE, which is not present as a child of an original resource or is not an announced child thereof.

To support resource announcement, an additional column in a resource template may specify attributes to be announced for inclusion in an associated announced resource type. For each announced <resourceType>, the addition of suffix "Annc" to the original <resourceType> may be used to indicate its associated announced resource type. For example, resource <containerAnnc> may indicate the announced resource type for <container> resource, and <groupAnnc> may indicate the announced resource type for <group> resource.

The present disclosure relates to a method and device for cloud-based sensor calibration in an M2M system. Herein, a sensor may measure a physical value and convert the measured value to a digital value. For example, a temperature sensor measures temperature in a place where the sensor is placed. Ideally, in case sensors fabricated by a same manufacturer and of a same type are installed in a same place, the sensors should measure a same value. However, each sensor may have a different measured value according to characteristics. In other words, each sensor may have a different converted digital value according to its characteristic. In addition, a sensor may not have an adequate zero criterion, which may produce an erroneous measured value.

A range of a sensor may move under the above-described condition, and an operating range of a process may be changed. For example, a process may be currently operated in a range of 0 to 200 degrees Celsius, but operation in a range of 0 to 500 degrees Celsius may be demanded for a changed work.

As for a CO₂ sensor, it is necessary for the sensor to know a domain for measuring CO₂ percentages. Based on the information, range, accuracy or precision may be determined to recommend CO2 adequately. For example, CO₂ volumes in indoor and outdoor air are between 400 ppm and 2,000 ppm. This means that measurement of indoor air quality in smart home requires various calibration formulas to be applied to CO₂ sensors.

Accordingly, each sensor needs to be calibrated before being deployed. Alternatively, adjustment should be applied for a measured value. In order to calibrate sensors, each of the sensors may have a separate circuit and a memory space in it. For example, sensors should support space that stores logic for performing calibration and a formula for calibration. Accordingly, resources necessary for sensor calibration raise prices of sensors and make it difficult to reduce the size of a sensor.

Cloud-based sensor calibration according to the present disclosure may allow a cloud, instead of a sensor device, to support a resource for calibration. Specifically, each sensor may have a unique identifier. In addition, when sensors are first deployed, each of the sensors may be calibrated in a local test device, and an output used for calibration may be generated in the local test device. An adjustment value, which is generated as a result of calibration, may be stored in a cloud platform where a sensor will be registered after being deployed. In this case, the sensor does not need to provide computing power or memory for calibration. When a sensor is registered in a platform, the platform may confirm a calibration value for the sensor and add the calibration value to a resource for the sensor. When the sensor generates a measured value, the platform may check a calibration value, and if the calibration value exists, the measured value may be adjusted based on the calibration value. In the present disclosure, an adjustment value may be referred to as `calibration value' or another term with an equivalent technical meaning.

According to the present disclosure, by performing sensor calibration using a cloud, a sensor may be calibrated irrespective of a place where the sensor is located and a place where the sensor is actually used. That is, according to various embodiments of the present disclosure, a sensor may be calibrated using a resource necessary for sensor calibration, sensor information, and the like, which are stored in a cloud. According to an embodiment of the present disclosure, after a result of calibration for a sensor performed in a first place is stored in a cloud, even if the sensor is used in a second place, calibration may be performed using the result (e.g. adjustment value or calibration value) stored in the cloud.

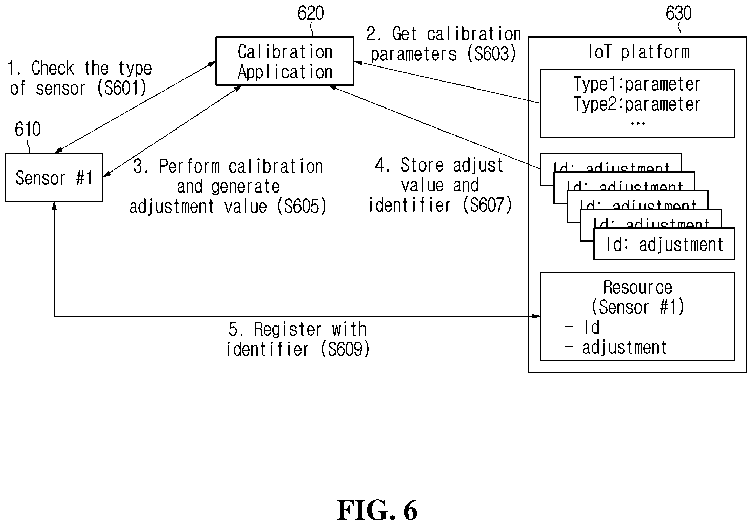

FIG. 6 illustrates an example of a procedure for sensor calibration using an IoT (Internet of Things) platform in an M2M system according to the present disclosure. Specifically, cloud-based sensor calibration may support a resource for calibration by using a cloud. Referring to FIG. 6, a sensor 610, a calibration application 620, and an IoT platform 630 may interact among them. Herein, the IoT platform 630 may be implemented as a cloud-based server. Herein, the sensor 610 may include a unique identifier. In addition, there may be a plurality of sensors. In addition, the sensor 610 may be replaced by a device of a different type that is subject to calibration.

At step S601, the calibration application 620 may identify a type of the sensor 610. That is, the calibration application 620 may identify information on the sensor 610. Herein, the information on the sensor 610 may include information on the type of the sensor, the ability of the sensor, and the like.

At step S603, the calibration application 620 may obtain a calibration parameter from the IoT platform 630. Specifically, the calibration application 620 may obtain a calibration parameter necessary for the sensor type identified at step S601. Herein, the calibration parameter may be obtained from a cloud within the IoT platform 630. The calibration parameter may be a parameter necessary for performing calibration of a sensor.

At step S605, the sensor 610 may perform calibration and generate an adjustment value. Specifically, the calibration application 620 may calibrate the sensor 610 by using the calibration parameter that is obtained at step S603. Herein, the calibration parameter may include at least one of a method for performing calibration, a form, a protocol, an accuracy, or a sensitivity. Accordingly, as a result of the calibration, the sensor 610 may generate an adjustment value.

At step S607, the IoT platform 630 may store the adjustment value and identifier information. That is, the IoT platform 630 may receive, from the calibration application 620, the adjustment value generated by the sensor 610 and store the received adjustment value. In addition, the IoT platform 630 may store identifier information of the sensor 610 that generates the adjustment value.

At step S609, the sensor 610 may register the identifier information in the IoT platform 630. Specifically, the sensor 610 may register the unique identifier and adjustment value as a resource in the IoT platform. By registering the identifier of the sensor in the IoT platform 630, the IoT platform 630 may obtain information regarding from which sensor the adjustment value stored at step S607 is generated.

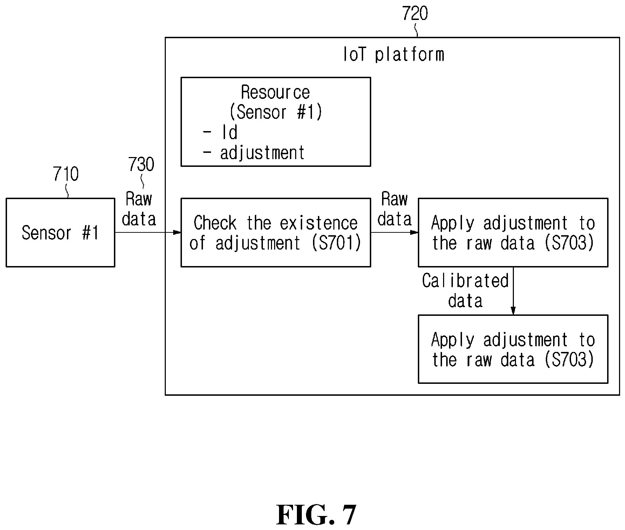

FIG. 7 illustrates an example of a cloud-based sensor calibration procedure in an M2M system according to the present disclosure. A sensor 710 mentioned in FIG. 7 may be any other device. In addition, the IoT platform 720 may include a cloud.

Referring to FIG. 7, the sensor 710 and the IoT platform 720 may exist. At step S701, the IoT platform 720 may check whether or not there are an adjustment value and/or an adjustment rule. The adjustment value and/or the adjustment rule may be present in a cloud in the IoT platform 720. Herein, the adjustment value may include a numerical value that is applied to a measured value of a sensor. In addition, the adjustment rule is a conversion tool associated with a method of an adjustment value to a measured value of a sensor and may be represented as, for example, a formula. Specifically, the IoT platform 720 may receive raw data 730 from the sensor 710 and check whether or not an adjustment value and/or an adjustment rule associated with the received raw data 730. Herein, the IoT platform 720 may check information on a type of the sensor in order to see information on the raw data 730.

At step S703, the IoT platform 720 may apply the adjustment value and/or the adjustment rule to the raw data 730. As an example, in case the adjustment value and/or the adjustment rule are present, the IoT platform 720 may perform calibration by applying the adjustment value and/or the adjustment rule to the raw data 730. Herein, a result value obtained by applying the adjustment value and/or the adjustment rule may be referred to as `calibrated data'. As another example, in case there is no adjustment value and/or adjustment rule, the IoT platform 720 may not perform calibration. In the present disclosure, `calibrated data' may also be referred to as `result value' or another term with an equivalent technical meaning.

At step S705, the IoT platform 720 may store calibrated data in a sensor resource. Herein, the IoT platform 720 may store the calibrated data together with a corresponding sensor type or sensor index information. By storing the calibrated data together with the corresponding sensor type or sensor index information, the IoT platform 720 may store information regarding how a sensor is calibrated by applying what adjustment value and/or adjustment rule. In the present disclosure, an adjustment rule may be referred to as `calibration rule' or another term with an equivalent technical meaning.

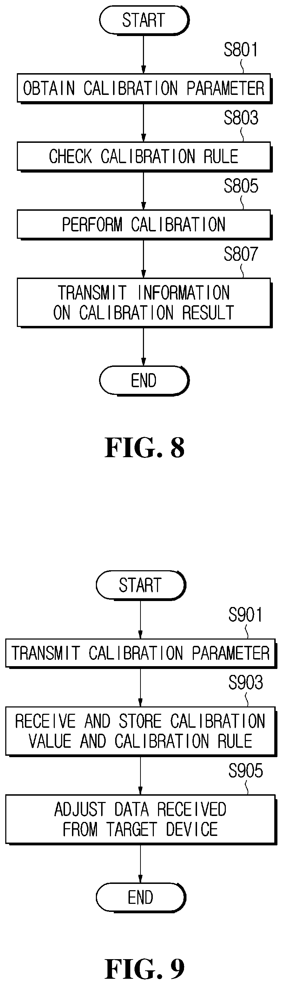

FIG. 8 illustrates an example of a procedure for performing calibration by a calibration device in an M2M system according to the present disclosure. An operating agent of FIG. 8 may be a device for performing calibration (e.g. device for executing a calibration application). In the description below, the operating agent of FIG. 8 will be referred to as 'device'. In the description below, a target device may be a sensor.

Referring to FIG. 8, at step S801, a device may obtain a calibration parameter. Specifically, the device may obtain the calibration parameter from a server. The calibration parameter may be information necessary for calibrating a target device. For example, the calibration parameter may include at least one of a rule for performing calibration, a method, a form, a protocol, an accuracy, or a sensitivity.

At step S803, the device may check a calibration rule. The calibration rule may mean a rule for applying a calibration value. According to an embodiment, the calibration rule may be a rule that is pre-stored in a calibration application. For example, a calibration rule corresponding to a type of a target device may be predefined. According to another embodiment, the device may generate a calibration rule during a calibrating operation. In this case, this step may be merged with step S805 below. That is, in the present disclosure, a calibration rule may be a predefined rule or a rule that is generated as a result of calibration.

At step S805, the device may perform calibration. The device may perform calibration for a target device by using the calibration parameter obtained at step S801. For example, the device may determine an error of a data value generated by target device and determine a calibration value based on the error and an adjustment rule. The calibration value means a value that is used to adjust data generated by the target device. According to an embodiment, calibration for the target device may be periodically performed.

At step S807, the device may transmit information on a calibration result to a server. The information on the calibration result may include the calibration value and/or the calibration rule. In addition, the device may also transmit information on the target device. The information on the calibration result, which is transmitted from the device, may be stored in the server together with the information on the target device. As an example, the information on the target information may include at least one of a type of the target device or an ability of the target device.

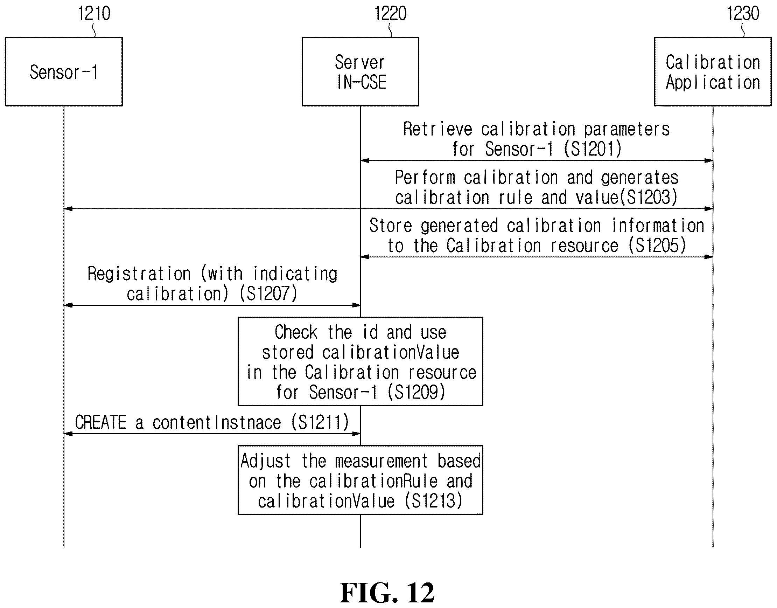

FIG. 9 illustrates a flowchart of cloud-based calibration for a target device in an M2M system according to the present disclosure. An operating agent of FIG. 12 may be a device (e.g. CSE) for managing a resource. In the description below, the operating agent of FIG. 9 will be referred to as 'device'.

Referring to FIG. 9, at step S901, a device may transmit a calibration parameter. Specifically, the device may transmit the parameter, which is necessary for performing calibration, to a calibration application. Accordingly, the calibration application may perform calibration for a target device by using the calibration parameter.

At step S903, the device may receive and store a calibration value and a calibration rule. That is, the device may receive information on a calibration result including the calibration value and the calibration rule from the calibration application and store the received information. That is, the calibration value and the calibration rule may be information that is generated by calibration that is performed based on the information transmitted at step S901.

At step S905, the device may adjust data received from the target device. Specifically, when the data generated by the target device is received, the device may adjust a value of the received data based on the calibration value and the calibration rule. In advance, the device may perform a registration procedure for the target device and identify whether or not the target device is a calibration device, based on information (e.g. identification information, type information) that is received during the registration procedure. Accordingly, when data generated by the target device is received, the device may correct a value of the data.

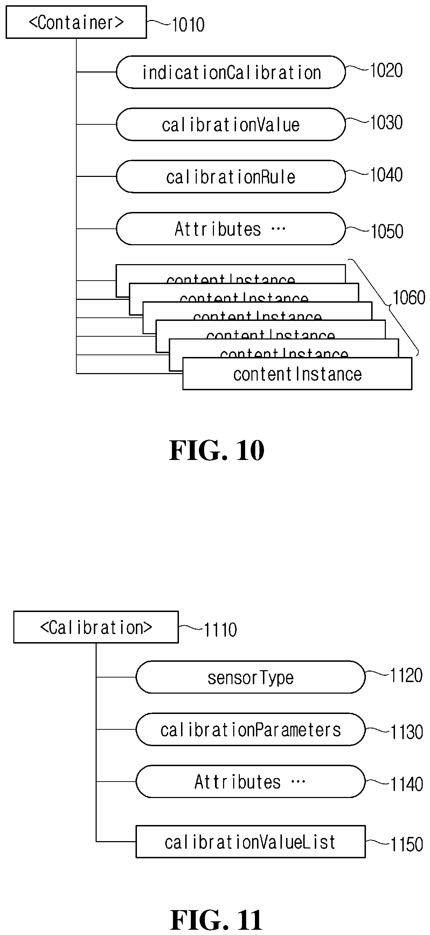

FIG. 10 illustrates container resources including information on a calibration result in an M2M system according to the present disclosure. FIG. 10 includes information that is generated and managed for calibration in an IoT platform. Referring to FIG. 10, a resource <Container> 1010 includes a plurality of sub-resources or attributes associated with a calibration application. For example, the plurality of sub-resources and attributes may include indicationCalibration 1020, calibrationValue 1030, calibrationRule 1040, Attributes 1050, and contentInstance 1060.
indicationCalibration 1020 indicates whether or not a target device needs calibration. calibrationValue 1030 provides a value to be adjusted. calibrationValue 1030 may be referred to as `calibration value' or `adjustment value'. calibrationRule 1040 provides a rule for applying a calibration value. Attributes 1050 and contenInstance 1060 include other necessary information for calibration of a target device. A target device mentioned in FIG. 10 may be a sensor, but the present disclosure is not limited thereto.

FIG. 11 illustrates resources for calibration in an M2M system according to the present disclosure. Herein, resources necessary for sensor calibration include information that is generated and managed for calibration in an IoT platform (or cloud). Referring to FIG. 10, a resource <Calibration> 1110 includes a plurality of sub-resources or attributes associated with sensor calibration. For example, the plurality of sub-resources or attributes may include <sensorType> 1120, <calibrationParameters> 1130, Attributes 1140, and <calibrationValueList> 1150.

sensorType 1120 indicates which type a sensor belongs to. calibrationParameters 1130 indicates information on a parameter for performing calibration. Particularly, the calibration mentioned herein may be a sensor adjustment process. Attributes 1140 and contenInstance 1150 include other necessary information for sensor calibration.

A calibration resource may hold information on a sensor type and a corresponding parameter. A calibration application may use the information to calibrate and to generate a calibration value. In addition, an index may be stored, and a calibration value list may be stored.

FIG. 12 illustrates an example of a cloud-based sensor calibration procedure in an M2M system according to the present disclosure. FIG. 12 exemplifies signal exchange among a sensor 1210, a server IN-CSE 1220, and a calibration application 1230.

Referring to FIG. 12, at step S1201, the calibration application 1230 may receive a calibration parameter associated with the sensor 1210 from the server IN-CSE 1220. Herein, the calibration parameter may be information necessary for calibrating the sensor 1210.

At step S1203, the calibration application 1230 may perform calibration of the sensor 1210. In addition, the calibration application 1230 may generate a calibration rule and a calibration value. Herein, the calibration value means a value to be adjusted to a measured value of the sensor. In addition, the calibration rule means a rule for applying the calibration value. According to another embodiment of the present disclosure, the calibration rule may be a predefined rule.

At step S1205, the calibration application 1230 may store calibration information in a calibration resource present in the server IN-CSE 1220. Herein, the calibration information may be the calibration value and/or the calibration rule that are generated at step S1203.

At step S1207, the server IN-CSE 1220 may register sensor information together with the calibration information. That is, the server IN-CSE 1220 may register calibration information together with information on a sensor generating the calibration information. Thus, the server IN-CSE 1220 may know from which sensor the calibration information is generated.

At step S1209, the server IN-CSE 1220 may check an identifier of a sensor, and may use a calibration value registered in a calibration resource. That is, after checking an identifier of a sensor, the server IN-CSE 1220 may perform calibration for the sensor by using a calibration value stored together with the identifier of the sensor.

At step S1211, the server IN-CSE 1220 may generate the resource <contentInstance>. Specifically, the server IN-CSE 1220 may receive information on the sensor from the sensor, generate the resource <contentInstance>, and thus store the information in the resource <contentInstance>.

At step S1213, the server IN-CSE 1220 may adjust a measured value of the sensor based on the resource <calibratonRule> and the resource <calibrationValue>. Specifically, the server IN-CSE 1220 may adjust the measured value of the sensor by using a calibration rule and a calibration value that are included in the resource <calibratonRule> and the resource <calibrationValue> respectively. For example, in case the measured value of the sensor is 10, the calibration rule is 'plus', and the calibration value is 0.5, a result value of the sensor may be 10.5, that is, a value obtained by adding the calibration value to the measured value.

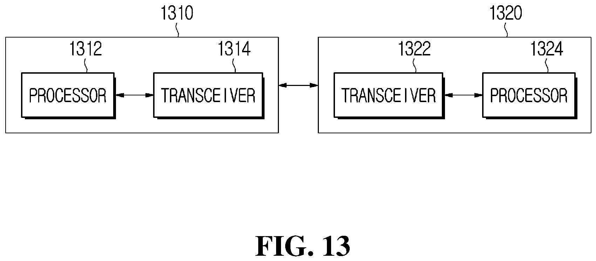

FIG. 13 illustrates a configuration of an M2M device in an M2M system according to the present disclosure. An M2M device 1310 or an M2M device 1320 illustrated in FIG. 13 may be understood as hardware functioning as at least one among the above-described AE, CSE and NSE.

Referring to FIG. 13, the M2M device 1310 may include a processor 1312 controlling a device and a transceiver 1314 transmitting and receiving a signal. Herein, the processor 1312 may control the transceiver 1314. In addition, the M2M device 1310 may communicate with another M2M device 1320. The another M2M device 1320 may also include a processor 1322 and a transceiver 1324, and the processor 1322 and the transceiver 1324 may perform the same function as the processor 1312 and the transceiver 1314.

As an example, the originator, the receiver, AE and CSE, which are described above, may be one of the M2M devices 1310 and 1320 of FIG. 13, respectively. In addition, the devices 1310 and 1320 of FIG. 13 may be other devices. As an example, the devices 1310 and 1320 of FIG. 13 may be communication devices, vehicles, or base stations. That is, the devices 1310 and 1320 of FIG. 13 refer to devices capable of performing communication and are not limited to the above-described embodiment.

The above-described exemplary embodiments of the present disclosure may be implemented by various means. For example, the exemplary embodiments of the present disclosure may be implemented by hardware, firmware, software, or a combination thereof.

The foregoing description of the exemplary embodiments of the present disclosure has been presented for those skilled in the art to implement and perform the disclosure. While the foregoing description has been presented with reference to the preferred embodiments of the present disclosure, it will be apparent to those skilled in the art that various modifications and variations can be made in the present disclosure without departing from the spirit or scope of the present disclosure as defined by the following claims.

Accordingly, the present disclosure is not intended to be limited to the exemplary embodiments shown herein but is to be accorded the widest scope consistent with the principles and novel features disclosed herein. In addition, while the exemplary embodiments of the present specification have been particularly shown and described, it is to be understood that the present specification is not limited to the above-described exemplary embodiments, but, on the contrary, it will be understood by those skilled in the art that various changes and modifications may be made without departing from the spirit and scope of the present specification as defined by the claims below, and such changes and modifications should not be individually understood from the technical thought and outlook of the present specification.

In this specification, both the disclosure and the method disclosure are explained, and the description of both disclosures may be supplemented as necessary. In addition, the present disclosure has been described with reference to exemplary embodiments thereof. It will be understood by those skilled in the art that various changes in form and details may be made therein without departing from the essential characteristics of the present disclosure. Therefore, the disclosed exemplary embodiments should be considered in an illustrative sense rather than in a restrictive sense. The scope of the present disclosure is defined by the appended claims rather than by the foregoing description, and all differences within the scope of equivalents thereof should be construed as being included in the present disclosure.

## Claims

1. A method for calibration based on a cloud in a machine-to-machine (M2M) system, the method comprising:
transmitting a calibration parameter stored in the cloud to a calibration application;
receiving a calibration value and a calibration rule from the calibration application; and
adjusting data received from a target device based on the calibration value and the calibration rule.

2. The method of claim 1, further comprising determining whether or not the target device needs calibration.

3. The method of claim 2, wherein whether or not the calibration is needed is determined based on a calibration period.

4. The method of claim 1, wherein the calibration value comprises a value that is generated as a result of calibration performed for the target device.

5. The method of claim 1, wherein the calibration rule comprises at least one of a rule predefined in the calibration application or a rule generated as a result of calibration performed for the target device.

6. The method of claim 1, further comprising receiving information that is necessary for the calibration and is included in a resource.

7. The method of claim 6, wherein the resource includes at least one of first information indicating whether or not the calibration is needed for the device, second information indicating a value to be adjusted, third information indicating a rule for applying the calibration value, fourth information indicating information on a device type, or fifth information indicating information on a parameter for performing the calibration.

8. A device for calibration based on a cloud in a machine-to-machine (M2M) system, the device comprising:
a transceiver; and
a processor coupled with the transceiver,
wherein the processor is configured to:
transmit a calibration parameter stored in the cloud to a calibration application,
receive a calibration value and a calibration rule from the calibration application, and
adjust data received from a target device based on the calibration value and the calibration rule.

9. The device of claim 8, wherein the device for calibration based on the cloud further determines whether or not the target device needs calibration.

10. The device of claim 9, wherein whether or not the calibration is needed is determined based on a calibration period.

11. The device of claim 8, wherein the calibration value comprises a value that is generated as a result of calibration performed for the target device.

12. The device of claim 8, wherein the calibration rule comprises at least one of a rule predefined in the calibration application or a rule generated as a result of calibration performed for the target device.

13. The device of claim 8, wherein the device for calibration based on the cloud further receives information that is necessary for the calibration and is included in a resource.

14. The device of claim 13, wherein the resource includes at least one of first information indicating whether or not the calibration is needed for the device, second information indicating a value to be adjusted, third information indicating a rule for applying the calibration value, fourth information indicating information on a device type, or fifth information indicating information on a parameter for performing the calibration.
